# EUROPEAN PATENT APPLICATION

(11) **EP 2 575 360 A1**
(43) Date of publication of application: **03.04.2013**
(21) Application number: 12158761.2
(22) Date of filing: 09.03.2012
(51) Int. Cl.: H04N 5/50, H04N 21/434, H04N 21/443

(54) **Method for channel search and executing an application program at the same time and television using the same**

(30) Priority: 27.09.2011 TW 100134928
(71) Applicant: HannStar Display Corp., Wugu Dist. New Taipei City 248 (TW)
(72) Inventor: Wu, Cheng-Liang, New Taipei City 238 (TW)
(74) Representative: advotec.

(57) **Abstract**

A multiplex application method for channel search is disclosed, which is used for a television. This method includes following steps of a channel performing a search operation, wherein the television executes an application simultaneously when the channel search operation is executed; and finishing the channel search operation. In other words, the television executes the channel search operation and the application at the same time for thereby providing the television with add-on values.

## Description

### CROSS-REFERENCE TO RELATED APPLICATION

This application claims the benefit of Taiwan Patent Application No. 100134928, filed on September 27, 2011, in the Taiwan Intellectual Property Office, the disclosure of which is incorporated herein in its entirety by reference.

### BACKGROUND OF THE INVENTION

### 1. Field of the Invention

The present invention relates to a multiplex application method for channel search and a television using the same method, in particular to the multiplex application method for channel search and the television using the method of executing other application programs during a channel search operation.

### 2. Description of the Related Art

Nowadays, people generally obtain new information through various media or enjoy entertainments through different ways. For example, the internet, newspaper, magazine or television has become the means for people to obtain new information in these days.

Take television as an example. Television programs are usually transmitted by cable or wirelessly, so that these programs broadcasted by the television stations can be received by televisions in different areas. And users at different locations can watch the television programs broadcasted by the television stations.

However, steps the channel performing a search operation of a television become an annoying operation in certain situations. For example, the channels of each country in a continent with a vast hinterland such as Europe come with different specifications, so that it is necessary to perform a search-operation for the corresponding channel when the television is used in different countries. Obviously, this situation is manifest for drivers. Sometimes, people may drive across different countries and it just takes minutes or hours to travel across countries such as in Europe. In this situation, users have to keep searching for channels on television before they can watch their desired television program.

### SUMMARY OF THE INVENTION

In view of the aforementioned problem, it is a primary objective of the present invention to provide a multiplex application method for channel search and a television using the method to overcome the problem that users cannot use the television while searching the channels.

To achieve the foregoing objective, the present invention provides a multiplex application method for channel search, and the method is applicable to in a television and comprises the following steps. Firstly, the television can execute an application program and search channels at meanwhile. This application program is capable for surfing the internet, listening to the music, showing brand image advisement or running a universal serial bus (USB) program. More specifically, if a user turns on a television and the television has not performed a channel search operation yet, then the television will not memorize the channel at this location. Thus, the television will perform a channel search operation and the user cannot watch any television program at this time. In the multiplex application method for channel search in accordance with the present invention, when the channel search operation is undergoing, a menu of application programs is provided for users to make the selection. In addition, the users can selectively execute the application programs on the menu such as surfing the internet or listening to the music.

Moreover, after the channel search operation is finished, the users can selectively terminate the application program. Or, the users may not want to watch the television immediately after ending the channel search operation. When the channel search operation ends, a screen of the television may show a menu for the users to select an option for tuning to a channel or continuing the current execution of the application program.

In addition, when the users tune to a channel, the television can also execute the aforementioned procedure of the multiplex application method for channel search at the same time. In other words, if there is a new channel available on the television, the users can have more choices to watch TV programs on new channels.

Besides performing a channel search operation directly when the television is turned on, the multiplex application method for channel search of the present invention also allows users to selectively execute the channel search operation of a television manually. In the automatic channel search operation, the television can be programmed to execute the channel search operation automatically after a period of time such as once a month.

The present invention further provides a television for executing the aforementioned multiplex application method for channel search. The television may be a cathode ray tube (CRT) television, a liquid crystal display (LCD) television or a plasma television.

In summary, the multiplex application method for channel search and the television in accordance with the present invention have the following advantage:

During a television channel search operation, users can use the application programs at the same time, so that the television is more value-added.

To make it easier for our examiner to understand the technical characteristics and effects of this invention, preferred embodiments accompanied by related drawings are described as follows.

### BRIEF DESCRIPTION OF THE DRAWINGS

FIG. 1 is a flow chart of a multiplex application method for channel search in accordance with the present invention;

FIG. 2 is a first schematic view of an application of a multiplex application method for channel search in accordance with the present invention;

FIG. 3 is a second schematic view of an application of a multiplex application method for channel search in accordance with the present invention,

FIG. 4 is a flow chart of a multiplex application method for channel search in accordance with another preferred embodiment of the present invention.

### DETAILED DESCRIPTION OF THE PREFERRED EMBODIMENTS

The technical characteristics of the present invention will become clear with the detailed description of the preferred embodiments accompanied with the illustration of related drawings as follows. It is noteworthy to point out that same numerals are used for representing respective elements for the description of the preferred embodiments and the illustration of the drawings.

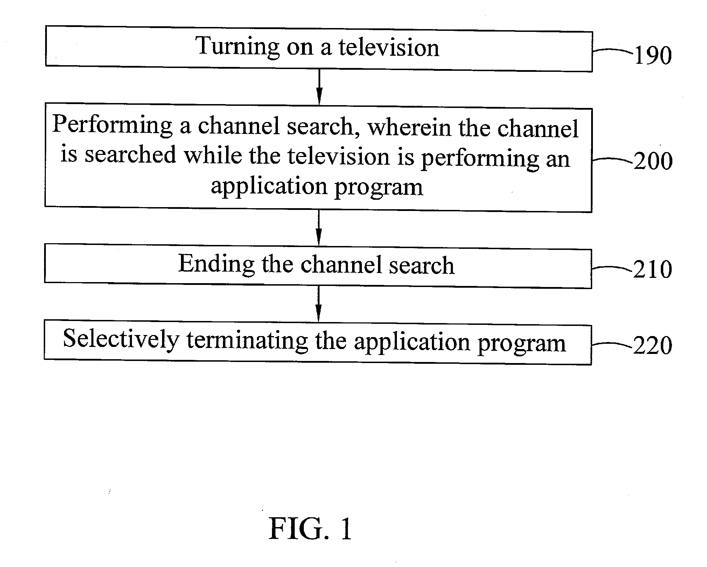

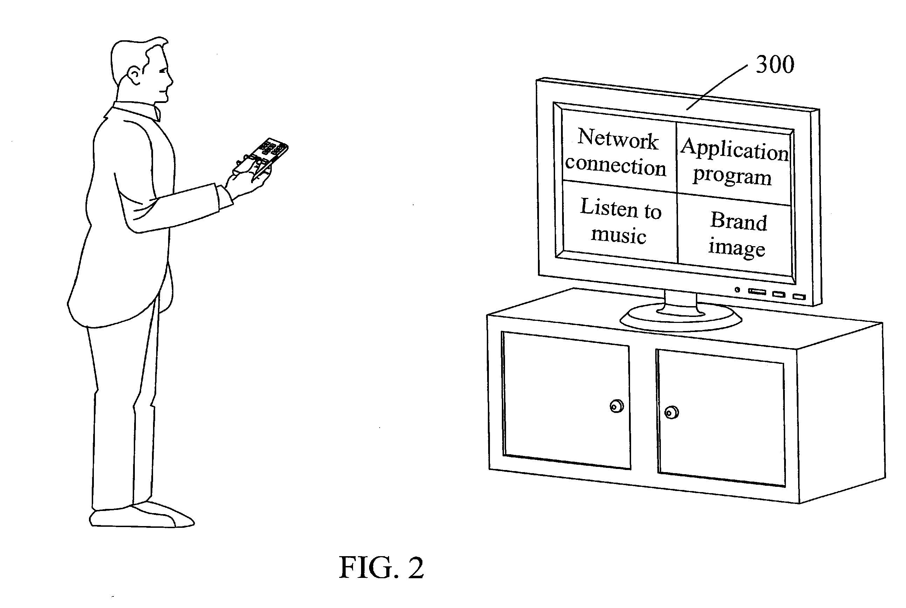

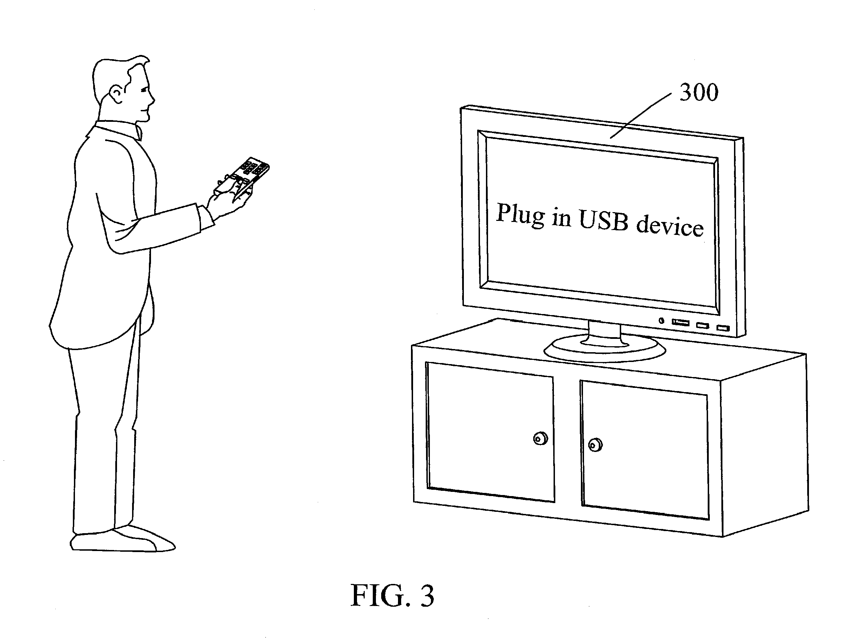

With reference to FIGs. 1 to 3 for a flow chart, a first schematic view, and a second schematic view of a multiplex application method for channel search in accordance with the present invention respectively. The multiplex application method for channel search comprises the following steps. First, in step 200, a channel search operation is performed wherein the television also executes an application program while performing the channel search operation. More specifically, a television generally cannot execute other application programs when the television is performing the channel search operation. Therefore, a user can not watch a TV program till the channel search operation is finished. Although present available central processing units (CPU) can process more data than ever with a quicker manner, there is still no television with the aforementioned function available. The multiplex application method for channel search in accordance with the present invention can perform the channel search operation and run other application programs at the same time by the multiplex processing function of the CPU. In addition, the multiplex application method for channel search in accordance with the present invention can perform the step of turning on a TV first (step 190) before carrying out the step of performing a channel search operation (step 200).

For example, the aforementioned application program includes a program for surfing the internet, listening to music, showing the brand image advisement or executing a universal serial bus (USB) program. More specifically, when the channel search operation is performed, a menu pops up on a screen of the television 300, which may include various executable application programs. As the Internet becomes increasingly popular, related network connection media are available everywhere, so that if a television is equipped with a related device such as a network card, the user can be connected to the network through the network card in order to surf the internet.

As an application program for playing back the music, the source of music can be a built-in content of the television or stored into a USB storage device. The television 300 can play the user's desired music merely by a relate driver program. In addition, the USB storage device can be used for storing other software, or data of an audio or video format. As long as the television supports the aforementioned data format, the data can be played by the television 300.

In addition, the application program can also include brand image advertising. For example, the manufacturer of the television 300 can embed the company's advertisement in an application program. The brand image advertising can be updated by using the aforementioned network, so that the user can see the latest product information or new advertisement.

It is noteworthy to point out that when the application program is executed, another application program can be executed simultaneously. For example, the user can listen to music, and execute an application program on the network at the same time. The performance of present existing CPUs has enhanced significantly, so that the channel search operation just costs a portion of the operation source of a CPU, and the remaining portion of the operation resource can be used for other applications. In other words, it is possible for a CPU with the multiplex processing function to perform several application programs at a time.

After finishing the channel search operation for all channels, the step 210 is carried out to end the channel search operation. In this way, the user can choose to continue using the application program or start watching variety of channels, even if the user is still using the application program (Step 220). For example, while the user is using an application program to listen to music and all channels have been searched, a screen of the television 300 can show a menu provided for the users to select whether to continue listening to the music or start watching programs of a channel.

In addition, since there would be new available channels after a period of time, the multiplex application method for channel search of the present invention can execute the steps 200 and 210 periodically, such as once per month or once per ten days, or the user can set the period of time. In addition, the user can choose to execute the steps 200 and 210 by the television 300. For example, the user can watch the television or send an instruction to the television 300 at some other time to start the channel search operation of the television 300.

In the multiplex application method for channel search of the present invention, the user can execute the aforementioned steps 200 and 210 while watching a channel. In other words, when the user watches a channel, the user can perform a channel search operation at the same time.

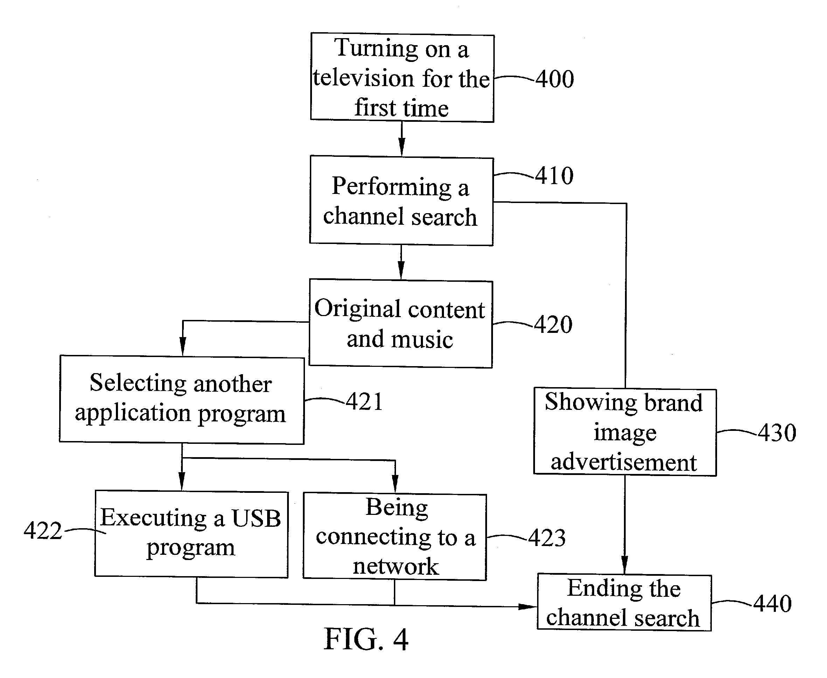

With reference to FIG. 4 for a flow chart of a multiplex application method for channel search in accordance with another preferred embodiment of the present invention. In this preferred embodiment, after turning on a television for the first time in step 400 or performing a channel search operation anytime in step 410, the user can select playing the original content and music (Step 420) or playing a brand image advertisement (Step 430). The original content refers to the content of related television information, brand information or company information provided for the user's reference.

After the step 420, the user can select a function of another application program (Step 421), such as executing a universal serial bus (USB) program (Step 422) or surfing the internet (Step 423).

After the channel search operation is finished (Step 440), the user can selectively continue executing the application program or start watching the channel.

In addition, the present invention further provides a television for executing the aforementioned multiplex application method for channel search, wherein the television can be a cathode ray tube (CRT) television, a liquid crystal display (LCD) television or a plasma television.

While the invention has been described by means of specific embodiments, numerous modifications and variations could be made thereto by those skilled in the art without departing from the scope and spirit of the invention set forth in the claims.

## Claims

1. A multiplex application method for channel search, applicable to a television (300), comprising steps of:
performing a channel search operation by the television (300), wherein when the channel search operation is performed, the television (300) also executes an application program at the same time; and
ending the channel search operation.

2. The multiplex application method for channel search as recited in claim 1, wherein the application program is a program for surfing internet, listening to music, showing a brand image advertisement, or using a universal serial bus (USB) application.

3. The multiplex application method for channel search as recited in claim 1 or 2, further comprising a step of selectively terminating the application program after the step of ending the channel search operation.

4. The multiplex application method for channel search as recited in one of claims 1 to 3, further comprising a step of turning on the television (300) before the step of executing the channel search operation.

5. The multiplex application method for channel search as recited in one of claims 1 to 4, wherein the step of executing the channel search operation and the step of ending the channel search operation are executed once per month.

6. The multiplex application method for channel search as recited in one of claims 1 to 5, wherein the step of executing the channel search operation is initiated selectively by a user.

7. The multiplex application method for channel search as recited in one of claims 1 to 6, further comprising a step of playing a channel by the television (300) before the step of executing the channel search operation.

8. The multiplex application method for channel search as recited in one of claims 1 to 7, further comprising a step of executing another application program in the step of executing the channel search operation.

9. A television (300), for executing the multiplex application method for channel search of one of claims 1 to 8.

10. The television (300) as recited in claim 9, wherein the television (300) is a cathode ray tube (CRT) television, a liquid crystal display (LCD) television or a plasma television.
